Europäisches Patentamt

European Patent Office

Office européen des brevets

(19)

(11) **EP 0 708 124 B1**

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int Cl.[6]: **C08G 18/08**

(21) Anmeldenummer: **95116086.0**

(22) Anmeldetag: **12.10.1995**

(54) **Verfahren zur Herstellung von thermoplastischen Polyurethanen**

Preparation process of thermoplastic polyurethanes

Procédé de préparation de polyuréthanes thermoplastiques

(84) Benannte Vertragsstaaten:
**BE DE ES FR GB IT NL**

(30) Priorität: **20.10.1994 DE 4437586**

(43) Veröffentlichungstag der Anmeldung:
**24.04.1996 Patentblatt 1996/17**

(73) Patentinhaber: **BASF Schwarzheide GmbH**
**01986 Schwarzheide (DE)**

(72) Erfinder:
 • **Eberhardt, Peter**
 **D-01987 Schwarzheide (DE)**
 • **Krech, Ruediger**
 **D-49356 Diepholz (DE)**
 • **Rotermund, Udo, Dr.**
 **D-01990 Ortrand (DE)**
 • **Techritz, Klaus**
 **D-01920 Bischheim (DE)**

(74) Vertreter: **Goldscheid, Bettina et al**
**BASF Aktiengesellschaft,**
**Patentabteilung ZDX - C6Y**
**67056 Ludwigshafen (DE)**

(56) Entgegenhaltungen:
EP-A- 0 010 601          EP-A- 0 571 828
US-A- 3 963 679

## Beschreibung

Die Erfindung betrifft ein Verfahren zur Herstellung von thermoplastischen Polyurethanen, in dem

a) organische und/oder modifizierte organische Polyisocyanate mit
b) mindestens einer oligomeren Polyhydroxy- und/oder Polyaminoverbindung mit einem mittleren Molekulargewicht von 400 bis 10 000 g/mol,

gegebenenfalls in Gegenwart von

c) mindestens zwei Zerewitinow-aktive Wasserstoffatome aufweisenden Kettenverlängerungsmitteln mit einem mittleren Molekulargewicht unter 400 g/mol,
d) Katalysatoren,
e) gegenüber Isocyanaten weniger als difunktionellen Verbindungen und/oder weniger als difunktionellen Isocyanaten sowie
f) Hilfsmitteln und/oder Zusatzstoffen,

in einem Zweiwellenextruder mit gleichem Drehsinn beider Wellen und einem Längen-/Durchmesserverhältnis von 20 bis 60 zur Umsetzung gebracht werden und das gebildete thermoplastische Polyurethan aus dem Extruder unter Formgebung ausgetragen wird.

Die Herstellung von Kunststoffen in Extrudern ist allgemein bekannt. Man spricht im Fall derartiger Polymer-Synthesen in einem Extruder im Gegensatz zur reinen thermoplastischen Verarbeitung von Kunststoffen von reaktiver Extrusion. Der als chemischer Reaktor verwendete Extruder wird demzufolge auch häufig als Reaktionsextruder bezeichnet.

In der Monographie "Reactive Extrusion: principles and practice" von MARINO XANTHOS (Editor), erschienen im Hanser Verlag, München, Wien, New York, Barcelona (1992) werden wichtige bisher bekannte Aspekte der Reaktionsextrusion beschrieben. Die Synthese von Polyurethanen im Reaktionsextruder wird in der erwähnten Monographie in dem Kapitel 4.2.3a, Seite 87 ff., dargestellt. Die Erzeugung der für die Erfindung relevanten Polyurethane gemäß dem Stand der Technik wird im Kunststoff-Handbuch Band VII, Hrsg. VIEWEG und HÖCHTLEN, Carl Hanser-Verlag München, 1966, sowie im Nachfolgeband 7, Hrsg. BECKER und BRAUN, Carl Hanser-Verlag, München, Wien, 1993, beschrieben. Die meisten dieser Stoffe besitzen mehr oder weniger den Charakter von Elastomeren.

Für die technische Herstellung von Polyurethanen im Reaktionsextruder sind verschiedene Verfahren bekannt, die man z.B. den DE-A-20 59 570, 23 02 564, 24 37 764, 24 47 368, 25 49 372, 28 42 806, 28 54 409, 29 25 944, 39 31 419, 40 17 571, 42 02 973 entnehmen kann.

Nahezu ausnahmslos wird in der Literatur ein Zweiwellenextruder mit gleichem Drehsinn beider Wellen zur Polyurethan-Synthese empfohlen. Einwellenextruder und Zweiwellenextruder mit gegenläufigem Drehsinn der Wellen scheiden offensichtlich wegen der zu geringen Mischwirkung während der Passage des Extruders aus, Extruder mit mehr als zwei Wellen aus Kostengründen.

Kurz nach der Einspeisung der für die Synthese benötigten Rohstoffe in den Extruder ist das Reaktionsgemisch sehr dünnflüssig, die Mischwirkung der Extruderwellen mit den bisher bekannten Verfahren in dieser Phase gering. Es entstehen mehr oder weniger Inhomogenitäten in der Polyurethanschmelze.

Die Vermeidung von Inhomogenitäten durch spezielle Auslegungen der Schneckengeometrie wird in einer Reihe von DE-Offenlegungsschriften, wie z.B. in der DE-A-23 02 564, 24 23 764, 25 49 372 und 28 42 806 beschrieben. Diesen Verfahren gemeinsam ist eine Schneckenkonfiguration mit einem hohen Besatz an Knetelementen, die stark scherend wirken und insbesondere auch in einer kritischen Reaktionsphase mit Viskositäten des reagierenden Gemisches von 10 bis 100 Pas intensiv Energie in die Reaktionsschmelze eintragen. In der erwähnten Monographie von M. XANTHOS (Hrsg.) stellt Bruce BROWN diese Konfiguration ebenfalls vor, wobei die hohe Menge an Kneteinheiten in 3 Zonen als Schlüssel zum Erfolg dieses Verfahrens angesehen wird. Nahezu alle folgenden Schriften zur Synthese von Polyurethanelastomeren gehen von dieser Schnekkenkonfiguration oder einem dieser Konfiguration ähnlichen Besatz der Extruderwellen mit relativ hohem Anteil an stark scherenden Knetelementen, die bei verhältnismäßig hohen Viskositäten der Schmelze über 10 Pas intensiv auf das Reaktionsgemisch einwirken, aus.

Beim Einsatz dieser Schneckenkonfiguration kann man zwar gelartige Knötchen wie angegeben mehr oder weniger verhindern, aber insbesondere nach längerem Extruderlauf über mehrere Stunden und Tage bilden sich gerade an den Knetelementen auch in einem Gemisch aus Dimethylformamid mit 1 Prozent Di-n-Butylamin unlösliche Hartsegmentbeläge, die sich schubweise lösen und massive Verunreinigungen, besonders bei härteren Rezepturen, bewirken. Bei Verwendung eines Schmelzefilters können diese oft dunkel gefärbten, aber auch helleren Teilchen, nicht immer vollständig zurückgehalten werden, da sie durch ihre Elastizität und Verformbarkeit auch Filter geringer Maschenweite passieren und im Polyurethan als zumindest optisch störend verbleiben können.

Bereits kurze Zeit nach Synthesebeginn, d.h. der Maschinenlaufzeit des Extruders von ca. 2 Stunden, liegt der auf dem Schmelzefilter einer Maschenweite von 42 µm zurückhaltbare Anteil an Inhomogenitäten bei Werten über 10 Gramm je Tonne Schmelze. Nach längerer Maschinenlaufzeit, etwa nach 15 bis 20 Stunden, nimmt dieser Wert oft noch erheblich zu.

Auch wenn man mit Hilfe eines Schmelzefilters diese Verunreinigungen zurückhalten kann, ergeben sich mit zunehmender Belegung des Filtersiebes Druckanstiege in der Schmelze, die sehr nachteilig für den gleichmäßigen Ablauf der Polyurethansynthese sind und die Gleichmäßigkeit der Qualität des Polyurethans beeinträchtigen. Der erforderliche häufige Wechsel der Filtersiebe bedingt neben Produktverlusten wiederum plötzliche Druckänderungen mit negativen Folgen für die Polyurethanqualität. Das Weglassen des Schmelzefilters ist bei Gehalten von Inhomogenitäten über 1 ppm in keinem Fall zu empfehlen, da diese Menge an Verunreinigungen im Polyurethan meist nicht mehr toleriert wird. Auch die Versuche, mit Hilfe von sehr intensiven Vormischungen der Reaktanten, wie z.B. in DE-A-42 02 973 beschrieben, die Inhomogenitätenbildung in der erwähnten Größenordnung unter 1 g je Tonne Schmelze zu senken, gelingen nicht. Es ist bekannt, daß auch aus einem ideal vermischten Reaktionsansatz eines Polyurethans im Verlauf der Reaktion wieder Entmischungen auftreten und Hartsegmentanteile, die aus Polyisocyanat und Kettenverlängerer entstehen, ausgeschieden werden.

Dieses Verhalten wird beispielsweise von G. ZEITLER in den Unterlagen des Polyurethan-Weltkongresses von 1987, Verlag Technomic, Lancaster, Basel 1987, Seite 148 ff., und auch von KNÖNER et al. in Plaste und Kautschuk, 33, Seite 127 ff., beschrieben. Insbesondere aus primären oder sekundären Aminen, selbst aus Wasserspuren um 0,01 % Wasser in den Polyhydroxyverbindungen mit Isocyanat gebildete Harnstoffgruppen können bei der Reaktionsführung gemäß den bisher bekannten Verfahren zur Polyurethansynthese im Zweiwellenextruder nicht mehr schmelzende Inhomogenitäten bilden, die den Wert von 1 ppm bei der Reaktionsextrudersynthese weit überschreiten.

Im WO 91/00304 wird nur noch eine einzige Mischzone mit hoher Scherwirkung im Viskositätsbereich über 100 Pas mit stark scherenden Knetelementen als wesentlich angesehen. Abgesehen davon, daß mit dieser Lehre Polyurethane ohne oder nahezu ohne oligomere Diole oder Diamine hergestellt werden, gilt sowohl für diesen Sonderfall als auch für die Polyurethane mit elastomerem Charakter, d.h. einem höheren Anteil an oligomeren Diolen, daß sich mit der vorgeschlagenen Schneckengeometrie und den damit verknüpften Verfahrensbedingungen nur Polyurethanschmelzen mit Inhomogenitäten über 10 g je Tonne erzeugen lassen.

Die Einhaltung einer konstanten Viskosität gemäß DE-A-20 59 570 erfordert eine Absenkung der Temperatur in "stromaufwärts" gelegenen Bereichen des Extruders mit Umsätzen des Polyisocyanates unter oder wenig über 50 %.

Es ist beispielsweise aus der erwähnten Veröffentlichung von KNÖNER et al. bekannt, daß die Geschwindigkeit der Bildung von Hartsegmenten auch aus ideal vermischten Reaktionsansätzen mit steigender Temperatur in diesem Umsatzbereich ein Maximum durchläuft, das sich mit steigendem Isocyanatgehalt immer stärker bei jeweils höheren Temperaturen ausprägt. Bei der Befolgung der Lehre gemäß DE-A-20 59 570 besteht für einen großen Teil üblicher Rezepturen für Polyurethane die Gefahr, daß mit Absenkung der Temperatur in den "stromaufwärts" gelegenen Bereichen des Extruders die Geschwindigkeit der Hartsegmentabscheidung geradezu katastrophal steigt und außerordentlich viele Inhomogenitäten entstehen.

Der Erfindung lag daher die Aufgabe zugrunde, das Verfahren zur Herstellung von thermoplastischen Polyurethanen im Zweiwellenextruder so zu verbessern, daß die durch ein Filtersieb einer Maschenweite von 42 µm zurückgehaltene Menge an Inhomogenitäten stark verringert wird und möglichst unter einem Gramm je Tonne Schmelze liegt, so daß diese im Polyurethan nicht nachweisbar sind.

Die Aufgabe wurde erfindungsgemäß dadurch gelöst, daß das Verfahren so durchführt wird, daß man zumindest einen Teil der Komponenten a) und b) sowie der gegebenenfalls mitverwendeten Komponenten c) bis f) in eine erste Zone des Zweiwellenextruders ($Z_1$) einbringt, die mit eingängigen Schneckenförderelementen ausgerüstet ist, welche in einem Längenbereich, beginnend ab 0 bis 3/100 und endend mindestens bei 8/100 und höchstens 30/100 der gesamten Schneckenlänge L, angeordnet sind, anschließend das niederviskose Gemisch durch eine Mischzone ($Z_2$) mit geringer Scherwirkung aus zweigängigen Schneckenförderelementen und/oder Mischelementen führt, wobei diese Mischzone ($Z_2$) innerhalb eines Längenbereiches zwischen 8/100 und 45/100 mit einer Gesamtlänge innerhalb dieses Bereiches von 5/100 bis 25/100 der gesamten Schneckenlänge L angeordnet ist, danach das Produkt in eine wenig scherend wirkende Stauzone ($Z_3$) leitet, wobei diese Stauzone ($Z_3$) innerhalb eines Längenbereiches zwischen 20/100 und 50/100 mit einer Gesamtlänge der Staustufe innerhalb dieses Bereiches von 0,2/100 bis 10/100 der gesamten Schneckenlänge L angeordnet ist, danach in einer Polymerisationszone ($Z_4$), die mit zweigängigen Förderschnecken ausgerüstet ist, die Polymerisation im hochviskosen Bereich durchführt, wobei sich die Zone ($Z_4$) in einem Längenbereich zwischen 30/100 und 100/100 der gesamten Schneckenlänge L befindet, und das Polyurethan austrägt, wobei das Verhältnis vom Produkt des auf die Extruderwellen wirkenden Drehmoments M in [Nm], der Drehzahl n der Extruderwellen in [$min^{-1}$] und dem Quadrat des kleinsten Innendurchmessers des Extrudergehäuses $D_G$ in [cm] zum freien zur Verfügung stehenden Reaktorvolumen V zwischen Extrudergehäuse und den Schnecken- und gegebenenfalls anderen Elementen als Besatz der Extruderwellen in [$cm^3$] größer als 750 ist.

Gegenstand der Erfindung ist damit ein Verfahren zur Herstellung von thermoplastischen Polyurethanen, in dem

a) organische und/oder modifizierte organische Polyisocyanate mit

b) mindestens einer oligomeren Polyhydroxy- und/oder Polyaminoverbindung mit einem mittleren Molekulargewicht von 400 bis 10 000 g/mol,

gegebenenfalls in Gegenwart von

c) mindestens zwei Zerewitinow-aktive Wasserstoffatome aufweisenden Kettenverlängerungsmitteln mit einem mittleren Molekulargewicht unter 400 g/mol,

d) Katalysatoren,

e) gegenüber Isocyanaten weniger als difunktionellen Verbindungen und/oder weniger als difunktionellen Isocyanaten sowie

f) Hilfsmitteln und/oder Zusatzstoffen,

in einem Zweiwellenextruder mit gleichem Drehsinn beider Wellen und einem Längen-/Durchmesserverhältnis von 20 bis 60 zur Umsetzung gebracht werden und das gebildete thermoplastische Polyurethan aus dem Extruder unter Formgebung ausgetragen wird, dadurch gekennzeichnet, daß man zumindest einen Teil der Komponenten a) und b) sowie der gegebenenfalls mitverwendeten Komponenten c) bis f) in eine erste Zone ($Z_1$) des Zweiwellenextruders einbringt, die mit eingängigen Schneckenförderelementen ausgerüstet ist, welche in einem Längenbereich, beginnend ab 0 bis 3/100 und endend mindestens bei 8/100 und höchstens 30/100 der gesamten Schneckenlänge L, angeordnet sind, anschließend das niederviskose Gemisch durch eine Mischzone ($Z_2$) mit geringer Scherwirkung aus zweigängigen Schneckenförderelementen und/oder Mischelementen führt, wobei diese Mischzone ($Z_2$) innerhalb eines Längenbereiches zwischen 8/100 und 45/100 mit einer Gesamtlänge innerhalb dieses Bereiches von 5/100 bis 25/100 der gesamten Schneckenlänge L angeordnet ist, danach das Produkt in eine wenig scherend wirkende Stauzone ($Z_3$) leitet, wobei diese Stauzone ($Z_3$) innerhalb eines Längenbereiches zwischen 20/100 und 50/100 mit einer Gesamtlänge der Staustufe innerhalb dieses Bereiches von 0,2/100 bis 10/100 der gesamten Schneckenlänge L angeordnet ist, danach in einer Polymerisationszone ($Z_4$), die mit zweigängigen Förderschnecken ausgerüstet ist, die Polymerisation im hochviskosen Bereich durchführt, wobei sich die Zone ($Z_4$) in einem Längenbereich zwischen 30/100 und 100/100 der gesamten Schneckenlänge L befindet, und das Polyurethan austrägt, mit der Maßgabe, daß das Verfahren so geführt wird, daß der Wert E , definiert als

$$E = \frac{M \times n \times D_G^{\,2}}{V} \;,$$

wobei

M -  das gesamte, auf beide Extruderwellen wirkende Drehmoment in [Nm],

n -  die Drehzahl der Extruderwellen in [$min^{-1}$],

$D_G$- den kleinsten Innendurchmesser des Extrudergehäuses in [cm] und

V -  das freie zur Verfügung stehende Reaktorvolumen zwischen Extrudergehäuse und den Schnecken- und gegebenenfalls anderen Elementen als Besatz der Extruderwellen in [$cm^3$]

bedeuten, größer als 750 ist.

Es zeigt sich überraschenderweise, daß bei Einhaltung des Wertes E über 750 mit der beschriebenen, im Gegensatz zu den bisherigen Lehren wenig scherend wirkenden, Schneckenkonfiguration bei den Reaktionsextrudern verschiedener Größe und Bauart die Polyurethan-Schmelze extrem wenig Verunreinigungen enthält.

Die auf einem Filtersieb der Maschenweite von 42 µm nach Durchgang von 1 Tonne Polyurethanschmelze zurückgehaltenen Verunreinigungen betragen weniger als 1 g.

Zu den Ausgangskomponenten für die Herstellung der erfindungsgemäßen thermoplastischen Polyurethane ist folgendes zu bemerken:

a) Als organische und/oder modifizierte organische Polyisocyanate (a) kommen beispielsweise aliphatische, cycloaliphatische, araliphatische, aromatische und heterocyclische Diisocyanate in Betracht. Im einzelnen seien beispielhaft genannt: aliphatische Diisocyanate, wie Hexamethylen-diisocyanat, bevorzugt werden cycloaliphatische Diisocynate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische.

Erfindungsgemäß besonders bevorzugte Diisocyanate sind aromatische Diisocyanate, wie Napthylen-1,5-diisocyanat, 3,3'-Dimethyl-4,4'-diisocyanatodiphenyl (TODI), 1,4-Diisocyanatobenzol und das entsprechend hydrierte Produkt, Toluylendiisocyanate und insbesondere die Diphenylmethandiisocyanat-Isomeren. Insbesondere bevorzugt ist das 4,4'-Diisocyanatodiphenylmethan oder sein Isomerengemisch mit bis zu 5 Mol-%, vorzugsweise 1 bis 4 Mol-%, des 2,4-Diisocyanatodiphenylmethans, zumeist begleitet von sehr geringen Mengen des 2,2'-Diisocyanato-diphenylmethan-Isomeren. Der Einsatz von Vorpolymeren aus Polyisocyanaten und den Vertretern der Komponenten (b) und ggf. (c) mit Isocyanat-Endgruppen anstelle der Polyisocyanate oder gemeinsam mit diesen als Mischung ist ebenfalls möglich. Die genannten Diisocyanate können gegebenenfalls zusammen mit bis etwa 15 Mol-% (bezogen auf Diisocyanat) eines höherfunktionellen Polyisocyanates eingesetzt werden. Die Menge des höherfunktionellen Polyisocyanats muß jedoch so begrenzt werden, daß ein noch schmelzbares beziehungsweise thermoplastisches Polyurethan erhalten wird. Eine größere Menge an höherfunktionellen Isocyanaten muß im allgemeinen durch die Mitverwendung von im Durchschnitt gegenüber Isocyanaten weniger als difunktionellen Verbindungen und/oder Isocyanaten (e) ausgeglichen werden, so daß eine zu weit gehende chemische Vernetzung des Produktes vermieden wird.

b) Als höhermolekulare oligomere Polyhydroxy- und/oder Polyaminoverbindungen (b) mit mittleren Molekulargewichten von 400 bis 10 000 g/mol eignen sich vorzugsweise Polyester-, Polyestercarbonat- und Polyetherdiole, beispielsweise Polyesterdiole aus geradkettigen oder verzweigten aliphatischen und/oder cycloaliphatischen Diolen und aliphatischen

Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten. Ferner sind geeignet Hydroxylpolycarbonate und Hydroxypolycaprolactone.

In einer bevorzugten Ausführungsform werden ein Butandiol-1,4-adipat-Polymer mit einem mittleren Molekulargewicht von 1500 bis 4000 g/mol oder ein Mischpolyesterdiol aus Butandiol, Ethandiol und Adipinsäure mit einem mittleren Molekulargewicht von 1500 bis 4000 g/mol verwendet.

Bevorzugt werden ferner Hydroxyetherdiole auf Basis Ethylenoxid, Propylenoxid oder Mischpolyether aus Propylenoxid und/oder Ethylenoxid und/oder Tetrahydrofuran, so z.B. Hydroxyetherdiole auf Basis Tetrahydrofuran mit einem Molekulargewicht von 1000 bis 3000. Geeignete Polyole werden z.B. in den DE-A-23 02 564, 24 23 764, 24 47 368, 25 49 372 oder 42 02 972 beschrieben.

Gegebenenfalls können auch höhermolekulare Polyaminverbindungen, vorzugsweise mit primären aromatischen Aminogruppen, eingesetzt werden. Bevorzugte Vertreter werden beispielsweise durch Hydrolyse von entsprechenden NCO-Prepolymeren auf Basis von höhermolekularen Polyhydroxyverbindungen und überschüssigen aromatischen Diisocyanaten durch (vorzugsweise basische) Hydrolyse hergestellt. Beispiele für diese Verfahren werden in DE-A-29 48 419, DE-A-30 39 600, DE-A-31 12 118, EP-A-61 627, EP-A-71 132 und EP-A-97 869 angegeben. In der DE-A-29 48 419 werden auch weitere Verfahren des Standes der Technik zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in DE-AS 16 94 152, FR-PS 14 15 317 oder DE-AS 11 55 907 beschrieben.

Der Einsatz von Vorpolymeren aus Polyisocyanaten (a) und den Komponenten (b) und ggf. (c) mit endständigen Zerewitinow-aktive Wasserstoffatome enthaltenden Gruppen sowie von Mischungen dieser Vorpolymere mit den beschriebenen Stoffen (b) und (c) ist ebenfalls möglich.

c) Als mindestens zwei Zerewitinow-aktive Wasserstoffatome aufweisende Kettenverlängerungsmittel (c) mit einem mittleren Molekulargewicht unter 400 g/mol kommen beispielsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylether des Hydrochinons,

wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylendiamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diaminodiphenylmethane.

Erfindungsgemäß finden insbesondere niedermolekulare Polyalkohole, vorzugsweise Diole, Diamine, aliphatische Diamine, Hydrazine und Hydrazidderivate Verwendung. Als Diamine seien Toluylendiamine oder Isophorondiamin hervorgehoben. Auch Aminoalkohole, wie Diethanolamin, N-Methyldiethanolamin, kommen erfindungsgemäß in Frage. Bevorzugte Kettenverlängerungsmittel sind Diole, wie z.B. Di- und Triethylenglykol, Hexandiol-1,6 und Hydrochinon-di-β-hydroxyethylether, sowie besonders bevorzugt das Butandiol-1,4, gegebenenfalls in Gemischen mit anderen Diolen.

Weitere bevorzugte Kettenverlängerungsmittel (c) mit einem mittleren Molekulargewicht unter 400 g/Mol sind z.B. die in DE-A-23 02 564, 24 23 764, 24 47 368, 25 49 372, 28 42 806 oder 42 02 973 beschriebenen Verbindungen.

d) Geeignete Katalysatoren (d), welche gegebenenfalls eingesetzt werden, um insbesondere die Reaktion zwischen den NCO-Gruppen der Diisocyanate (a) und den Hydroxylgruppen der Aufbaukomponenten (b) und (c) zu beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titanverbindungen, z.B. Titansäureester, Eisenverbindungen, wie z.B. Eisen-(III)-acetylacetonat, Bleiverbindungen, wie Bleiacetat, Zinnverbindungen, z.B. Zinndiacetat, Zinndioctoat, Zinndilaurat oder die Zinndialkylsalze aliphatischer Carbonsäuren, wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung eingesetzt.

e) Gegenüber Isocyanaten weniger als difunktionelle Verbindungen und/oder weniger als difunktionelle Isocyanate (e) werden gegebenenfalls benötigt, um eine zu starke Vernetzung des thermoplastischen Polyurethans zu vermeiden, wie sie der Einsatz von höherfunktionellen Polyisocyanaten verursachen kann.

Als monofunktionelle Verbindungen werden beispielsweise Monoamine, wie Butyl- oder Dibutylamin, Hydroxylamin, Stearylamin, N-Methylstearylamin, sowie Monoalkohole, wie Butanol-1, 2-Ethylhexanol-1, Dodecanol-1, Isobutanol oder tert.-Butanol, Cyclohexanol oder Ethylenglykolmonomethylether und Stearylalkohol, eingesetzt.

f) Vor und/oder bei und/oder nach der Polyurethan-Reaktion können selbstverständlich die üblichen Hilfsmittel und/oder Zusatzstoffe einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe, Verstärkungsmittel und Weichmacher sowie thermoplastisch aufschmelzbare Kunststoffe.

Als Gleit- und/oder Trennmittel werden vorzugsweise Wachse oder Öle verwendet, ferner z.B. langkettige Verbindungen mit Carboxyl-, Ester-, Amid-, Urethan- oder Harnstoffgruppen sowie auch Silicone.

Als Weichmacher werden insbesondere bekannte Esterverbindungen, beispielsweise Dioctylphthalat und/oder Di-Nonyladipat usw. eingesetzt.

Erfindungsgemäß geeignete thermoplastisch aufschmelzende Kunststoffe sind beispielsweise thermoplastische Polyurethane, die in einem getrennten Syntheseschritt gemäß dem Stand der Technik erzeugt werden, ABS-Pfropfcopolymerisate, in bekannter Weise hergestellt aus den Monomeren Acrylnitril, Butandien und Styrol bzw. α-Methylstyrol, Polyethylen und Polypropylen, Copolymere aus Ethylen und anderen Olefinen, PVC, Polycarbonate und andere an sich bekannte thermoplastische Kunststoffe.

Nähere Angaben über die obengenannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962, bzw. 1964, oder den DE-A-28 54 409, 29 20 501, 33 29 775 und 34 05 531 zu entnehmen.

Die Mengen an Reaktionskomponenten (a) bis (f) werden so gewählt, daß das molare Verhältnis von Isocyanatgruppen und Zerwitinowaktiven Gruppen zwischen 0,9 und 1,15, bevorzugt zwischen 0,95 und 1,05, liegt. Die Dosierschwankungen der Stoffe, die diese Gruppen tragen, müssen in erfindungsgemäßer Weise kleiner als 0,5 % sein.

Als Reaktionsextruder werden übliche Zweiwellenextruder mit gleichem Drehsinn beider Wellen und einem Längen-/Durchmesserverhältnis von 20 bis 60 eingesetzt.

Die Art der als wesentlich für die Erfindung eingesetzten Schneckenelemente ist beispielsweise in den entsprechenden Firmenschriften der Leistritz Aktiengesellschaft, Nürnberg, oder der Fa. Werner und Pfleiderer GmbH, Stuttgart, beschrieben.

Als Beispiele seien die in der Firmenschrift der Fa. Leistritz Aktiengesellschaft zum Zweiwellenextruder LSM 30.34 GL (Drucksachen Nr. 1.3. - 11) erwähnten Elemente zum Besatz der Extruderwellen GFA 1-30-R 2, GFA 1-30-R als eingängige Schneckenförderelemente, GFA 2-60-R, GFA 2-45 R, GFA 2-30 R, GFA 2-20-R als zweigängige Schneckenförderelemente verschiedener Steigung sowie die für den Gegenlaufextruder vorgesehenen Schlitzstauelemente ZSS 1-R4 genannt, die auch im Gleichlaufextruder eingesetzt werden können. In der Firmenschrift "Zweiwelliger Schneckenkneter ZSK, Wissenswertes über Entwicklung und Verfahrenstechnik", 05119/1-1,5-VIII.91KODÖ" der Fa. Werner und Pfleiderer werden ebenfalls die für den Besatz von Extruderwellen zweiwelliger Gleichlaufextruder wesentlichen Elemente beschrieben. Bei der Fa. Werner und Pfleiderer nennt man einen 2-Wellen-Gleichlaufextruder auch Zweiwellenkneter, abgekürzt ZSK.

Die Umsetzung der Komponenten a) bis f) zu dem erfindungsgemäßen thermoplastischen Polyurethan erfolgt in den vier aufeinanderfolgenden Zonen $Z_1$ bis $Z_4$ des Extruders, die jeweils eine Länge von $z_1$ bis $z_4$ aufweisen und deren Summe die Gesamtschneckenlänge L bildet, d. h.

$$z_1 + z_2 + z_3 + z_4 = L \ .$$

Die erste Zone ($Z_1$) des Zweiwellenextruders der Länge $z_1$ ist erfindungsgemäß mit eingängigen Schneckenförderelementen ausgerüstet, welche in einem Längenbereich, beginnend ab 0 bis 3/100 und endend mindestens bei 8/100 und höchstens 30/100 der gesamten Schneckenlänge L, angeordnet sind.

Es ist überraschend, daß der Einzug der sehr dünnflüssigen Reaktionskomponenten mit eingängigen, wenig mischenden Elementen, die eigentlich zur axialen Zwangsförderung hochviskoser Schmelze und zum Einzug fester Stoffe gedacht sind, wesentlich für die Verminderung der in der Polyurethanschmelze entstehenden Inhomogenitäten ist. Setzt man jedoch eingängige Schnecken nicht zum Einzug, sondern zum Druckaufbau ein, wie in DE-A-24 47 368 in Beispiel 1 erwähnt, ergeben sich verschiedene Nachteile. Im Fall des Druckaufbaus im niederviskosen Bereich bis zur Stauzone erfolgt im Falle des Einsatzes eingängiger Elemente vor der Stauzone eine beträchtliche Erhöhung des Gehaltes an Inhomogenitäten in der Polyurethanschmelze. Beim Einsatz eingängiger Elemente zum Fördern und Ausreagieren "stromabwärts" verschenkt man Reaktorvolumen - eingängige Schnecken weisen ein geringeres freies Volumen als zweigängige auf- und verzichtet auf die Mischwirkung zweigängiger Schnecken im hochviskosen Bereich, was wiederum zu inhomogenen Schmelzen führt.

Das niederviskose Gemisch wird anschließend durch eine Mischzone ($Z_2$) aus zweigängigen Schneckenför-derelementen mit geringer Scherwirkung geleitet, die teilweise durch wenig scherend wirkende Mischelemente ersetzt werden können. Als wenig scherend wirkende Mischelemente innerhalb der Mischzone ($Z_2$) mit ansonsten zweigän-gigen Förderelementen werden beispielsweise Schneckenmischelemente als Förderschnecken mit Durchbrüchen, wie sie z.B. in der genannten Firmenschrift von Werner und Pfleiderer mit Bild 28 vorgestellt werden, eingesetzt. Knetelemente sind in erfindungsgemäßer Weise als derartige Mischelemente nur dann geeignet, wenn sie im Gegensatz zu den DE-A-23 02 564, 24 37 764, 25 49 372, 28 42 806 oder auch WO 91/00304 wenig scherend und stärker mischend ausgelegt sind. Eine derartige Kombination von Knetelementen ist beispielsweise in der genannten Firmenschrift von Werner und Pfleiderer auf Seite 19 in Bild 34 dargestellt. Aus dieser Abbildung geht klar hervor, daß verschiedene Schneckenelemente - in diesem Fall Knetelemente - eine unterschiedliche Scherwirkung auf das in einem Zweiwellenkneter befindliche Produkt ausüben. So bewirkt beispielsweise der Einsatz breiterer Knetscheiben bei sonst gleicher Anordnung eine höhere Scherung, desgleichen wird eine höhere Scherung auch durch Rücknahme der Förderwirkung bei gleichbleibend breiten Knetscheiben erzielt. Dieses Beispiel zeigt, daß neben der Scherwirkung auch die Mischwirkung der Schneckenelemente von ihrer Geometrie abhängt; so kann man in einfacher Weise durch Breite und Anordnung von Knetscheiben die Mischwirkung neben der Scherwirkung relativ unabhängig variieren.

Diese Zusammenhänge sind dem Fachmann bestens bekannt und es ist durchaus erlaubt, auch im Falle einer im Extruder stattfindenden Reaktion von diesen unterschiedlichen Scher-, Misch- und Stauwirkungen der Schnek-kenelemente auszugehen. Die Begriffe stark oder schwach scherend, stark oder schwach mischend, stark oder schwach fördernd bzw. stark oder schwach stauend sind demnach für den Fachmann klar definiert, obwohl eine quantitative, zahlenmäßige Beschreibung dieser Wirkungen bis heute noch nicht bekannt und üblich ist. Es werden deshalb diese Begriffe in Fachveröffentlichungen und Patentschriften als bekannte technische Bezeichnungen verwendet.

Stark scherend wirkende Knetelemente können in der sensiblen Phase der Reaktion in der Mischzone ($Z_2$) bei Viskositäten unter 10 Pas gegebenenfalls die Ausfällung von Hartsegmenten als Inhomogeniäten provozieren. Legt man stark scherende Knetelemente in einen höheren Viskositätsbereich über 10 Pas gemäß den o.g. DE-Offenlegungsschriften oder gar über 100 Pas gemäß WO 91/00304, kann man zwar geringe Knötchenbildungen in gewissem Umfang vermindern, beobachtet aber trotz der Selbstreinigung vor allem nach längerer Laufzeit die Bildung von unlöslichen Hartsegmenten und deren Verweilen und Haften an den Knetelementen. Von Zeit zu Zeit lösen sich dann diese Teilchen ab, die zwar zum großen Teil abgesiebt werden können, aber insgesamt in einer Menge weit über 20 ppm entstehen und damit die genannten Probleme verursachen.

Es hat sich gezeigt, daß in einem Viskositätsbereich der das Polyurethan bildenden Komponenten über 10 Pas die Ausscheidung der Inhomogenitäten mehr oder weniger bereits abgeschlossen ist. Die bisherigen Lehren gemäß der genannten Schriften schlagen demzufolge das Zerstören entstandener Teilchen unter starker Scherung vor. Es ist erfindungsgemäß jedoch besser, das Entstehen abscheidbarer Inhomogenitäten im Viskositätsbereich unter 10 Pas zu verhindern, wozu die beschriebene wenig scherende Mischwirkung überraschenderweise gut geeignet ist. Die Viskosität des sich bildenden Polyurethans ist ein Gradmesser für den Polymerisationsgrad. Wenn als Komponente (f) thermoplastische Kunststoffe in das Reaktionsgemisch eingezogen werden, ist selbstverständlich die Viskosität der gesamten Stoffmenge höher als 10 Pas, aber die Viskosität des sich bildenden Polyurethans in dieser Mischung unter 10 Pas, d.h. in einem bezüglich Hartsegmentbildung kritischen Bereich des Polymerisationsgrades, auf den in erfindungsgemäßer Weise zur Verhinderung von Inhomogenitäten Einfluß genommen wird.

Es ist in erfindungsgemäßer und bevorzugter Weise auch möglich, in der Mischzone ($Z_2$) die alleinige Mischwirkung der zweigängigen Förderelemente auszunutzen. Verfolgt man die Viskosität der reagierenden Mischung in einem separaten Versuch außerhalb des Extruders bei vergleichbaren Temperaturen, beispielsweise in einem Viskosimeter oder in einem die Viskosität registrierenden Laborkneter, kann man in Abhängigkeit von der Reaktionszeit die Viskosität der Mischung an einer bestimmten Stelle des Extruders ermitteln.

Die Mischzone ($Z_2$) ist innerhalb eines Längenbereiches zwischen 8/100 und 45/100 der gesamten Schneckenlänge L angeordnet und weist innerhalb dieses Bereiches eine Gesamtlänge $z_2$ von 5/100 bis 25/100 der gesamten Schneckenlänge L auf.

Danach wird das Produkt in eine Stauzone ($Z_3$) geleitet. Das Aufstauen der einen sehr niedrigen Polymerisationsgrad des Polyurethans aufweisenden Mischung mit einer wenig scherenden, jedoch mischend wirkenden Stauzone $Z_3$ ist von entscheidender Bedeutung für den Erhalt des erfindungsgemäßen Produktes. Dies geschieht im einfachsten Fall durch die Verringerung der Schneckensteigung der zweigängigen Förderelemente. Es können jedoch auch wenig scherend und dabei mischende Stauelemente, z.B. die bereits erwähnten Schlitzstauelemente, wie sie in der genannten Firmenschrift der Leistritz Aktiengesellschaft, Nürnberg, für Gegenlauf-Extruder beschrieben werden und/oder linksgängige Schneckenförderelemente und/oder wenig scherend und gut mischend wirkende Knetelemente und/oder die bereits beschriebenen Schneckenmischelemente Verwendung finden. Letztere wirken wegen des Rückflusses in den Durchbrüchen der Schneckenkämme, gegebenenfalls verbunden mit einer Verringerung der Schneckensteigung, in erwünschter Weise stauend und mischen. Stark scherend wirkende Stauelemente, wie Stauscheiben, oder stark scherend und wenig mischend ausgelegte Knetelemente sind zum erfindungsgemäßen Abstauen der niederviskosen Mischung ungeeignet, da durch die starken Scherungen das Ausfällen von Inhomogenitäten provoziert werden kann.

Die Stauzone ($Z_3$) befindet sich innerhalb eines Längenbereiches zwischen 20/100 und 50/100 der gesamten Schneckenlänge L und weist eine Gesamtlänge $z_3$ innerhalb dieses Bereiches von 0,2/100 bis 10/100 der gesamten Schneckenlänge L auf.

Danach wird in einer Polymerisationszone ($Z_4$), die mit zweigängigen Förderschnecken ausgerüstet ist, die Polymerisation im hochviskosen Bereich weitergeführt. In diesem Abschnitt, insbesondere im letzten Teil der Schnecke vor dem Austritt des Polyurethanes, findet zwar kein starker chemischer Umsatz mehr statt, aber der geringe Restumsatz bewirkt den wesentlichen Anteil der Erhöhung des Polymerisationsgrades. Es ist also nicht richtig, wenn man diese Zone als reine Förderzone der Schmelze betrachtet.

Die in den DE-A-23 02 564, 24 37 764, 25 49 372 und 28 42 806 beschriebenen Knetelemente in diesem Abschnitt stören offensichtlich diesen Reaktionsverlauf, führen zu erheblichen Belägen und starker Erhöhung der Verunreinigungen in der Schmelze.

Das erfindungsgemäße Fehlen derartiger Knetelemente in der Polymerisationszone ($Z_4$) führt entgegen der bisher bekannten Lehren zu einem besonders sauberen Produkt.

Die Zone ($Z_4$) der Länge $z_4$ befindet sich in einem Längenbereich zwischen 30/100 und 100/100 der gesamten Schneckenlänge L.

Anschließend wird das thermoplastische Polyurethan in üblicher Weise ausgetragen und der Formgebung unterzogen.

Das Verfahren wird erfindungsgemäß so durchgeführt, daß die Komponenten a) bis f) entweder einzeln über getrennte Leitungen in den Extruder eingespeist werden oder deren Zugabe ganz oder teilweise als Vormischung erfolgt. Es können beliebige Vormischungen der Ausgangskomponenten, die vor der Eingabe mit an sich bekannten Mischaggregaten hergestellt werden, zum Einsatz kommen. Es ist auch möglich, den Strom einzelner Komponenten oder Vormischungen aufzuteilen.

Dabei können die Komponenten a) bis e) und die flüssigen Hilfs- und Zusatzstoffe f), deren Vormischungen sowie von der Gesamtmenge abgetrennte Anteile der Komponenten a) bis f) oder der Vormischungen an einer oder mehreren Stellen in den Extruder eingebracht werden. Die Einspeisung erfolgt vorzugsweise auf dem eingängigen Streckenabschnitt der Zone $Z_1$. Die flüssigen Hilfs- und Zusatzstoffe f) und Katalysatoren d) sowie die Restmengen der Komponenten a) bis c) und e) und der Vormischungen können auch an späterer Stelle zugegeben werden.

Feste Hilfs- und Zusatzstoffe f) werden vorteilhafterweise nach der Stauzone ($Z_3$) in den Extruder eingeführt oder vor der Zugabe der Komponenten a), b), c) und e) auf dem eingängigen Schneckenabschnitt ($Z_1$) eingebracht.

Das molare Verhältnis zwischen Isocyanatgruppen und allen an der Reaktion beteiligten Zerewitinow-aktiven Wasserstoffatomen liegt erfindungsgemäß zwischen 0,9 und 1,15. Die Dosierschwankungen für die diese Gruppen tragenden Stoffe muß unter 0,5 % liegen.

Das Verfahren wird erfindungsgemäß so geführt, daß das Verhältnis vom Produkt des auf die Extruderwellen wirkende Drehmoments M in [Nm], der Drehzahl n der Extruderwellen in [$min^{-1}$] und dem Quadrat des kleinsten Innendurchmessers des Extrudergehäuses $D_G$ in [cm] zum freien zur Verfügung stehenden Reaktorvolumen V zwischen Extrudergehäuse und den Schnecken- und gegebenenfalls anderen Elementen als Besatz der Extruderwellen in [$cm^3$]

größer als 750 ist.

Damit ergibt sich ein Wert E , definiert als

$$E = \frac{M \times n \times D_G{}^2}{V} \; ,$$

wobei

M - das gesamte, auf beide Extruderwellen wirkende Drehmoment in [Nm],

n - die Drehzahl der Extruderwellen in [min⁻¹],

$D_G$- den kleinsten Innendurchmesser des Extrudergehäuses in [cm] und

V - das freie zur Verfügung stehende Reaktorvolumen zwischen Extrudergehäuse und den Schnecken- und gegebenenfalls anderen Elementen als Besatz der Extruderwellen in [cm³]

bedeuten, der größer als 750 sein muß, um ein erfindungsgemäß reines Produkt zu erhalten.

Schneckengeometrien lassen sich selbst für relativ einfache Extrusionsaufgaben ohne begleitende chemische Reaktion im Zweiwellenkneter nicht eindeutig rechnerisch erfassen. Das geht u.a. aus der erwähnten Firmenschrift der Fa. Werner und Pfleiderer, Seite 17, hervor. Es ist demzufolge eine Berechnung der Geometrie oder deren theoretische Erklärung mit dem heutigen Kenntnisstand für den weit komplizierteren Fall der Reaktionsextrusion nicht möglich. Es ist überraschend, mit welch relativ einfachen Geometriekombinationen das Reinheitskriterium eines Inhomogenitätengehaltes von kleiner 1 g je Tonne Schmelze im Gegensatz zu bisher bekannten Geometrien erfüllt werden kann, wenn man gleichzeitig den erfindungsgemäßen Wert E über 750 einhält. Bei Einstellung des Wertes E muß ein dem Verfahren gemäß ungehinderter Schmelzefluß vorliegen. Dieser liegt vor, wenn die Strömungswiderstände für die Schmelze dem Verfahren bei ungehindertem Lauf entsprechen. Stark belegte Schmelzefilter beeinflussen beispielsweise den Wert E in nicht erfindungsgemäßer Weise. In diesem Fall gilt der Wert E kurz nach Einlegen eines frischen Siebes oder ohne Sieb. Bei erfindungsgemäßer Ausführung, d.h. bei Einstellung eines Wertes E über 750 mit frei durchgängigem Sieb, bilden sich jedoch so wenig Beläge, daß stets ein ungehinderter Schmelzefluß vorliegt.

Der Wert E wird in erfindungsgemäßer Weise durch Variation der Katalysatormengen, der Gehäusetemperaturen und des Durchsatzes in den erforderlichen Bereich über 750 gebracht, bevorzugterweise größer als 950, besonders bevorzugt über 1100. Die Gehäusetemperaturen können im Bereich zwischen 80 und 280°C schwanken, bevorzugterweise jedoch zwischen 120 und 260°C, besonders bevorzugt zwischen 140 und 260°C. Die Verweilzeit im Extruder bewegt sich in erfindungsgemäßer Weise zwischen 0,3 und 5 Minuten, bevorzugt zwischen 0,5 und 3 Minuten. Die Drehzahlen bewegen sich dabei in den Grenzen von 120 bis 450 Umdrehungen je Minute, bevorzugt im Bereich von 170 bis 300 Umdrehungen je Minute.

Die Erfindung wird an nachfolgenden Beispielen erläutert:

Es kamen zwei marktübliche Zweiwellenkneter zum Einsatz:

| Extruder I: Leistritz-Zweischnecken Laborextruder Gleichlaufsystem LSM 30.34 GL | |
| --- | --- |
| Reaktorvolumen V | 550 cm³ |
| Schnecken-Durchmesser D: | 34 mm |
| Schneckenlänge: | 35 D |
| Max. Dauerbetriebsdrehmoment als Summe für beide Schnecken: | 246 Nm |
| Heizzonen | 10 |
| Gehäuse | 10 |
| Dosierung flüssiger Stoffe mit Kolbendosierpumpen, Dosiergenauigkeit | ≤0,5 % |
| Dosierung fester Stoffe in offene Gehäuse mit Dosierwaagen der Bereiche 1 kg/h bis 20 kg/h und 2 kg/h bis 5 kg/h. Schmelzeaustritt aus 3 Düsen mit Unterwassergranulierung. Anwendung eines Schmelzefiltersiebes, kleinste Maschenweite 42 μm zur Kontrolle der Reinheit der Schmelze; normale Synthese ohne Sieb. | |

| Extruder II: Zweiwellenkneter ZSK 58 der Fa. Werner und Pfleiderer | |
| --- | --- |
| Reaktorvolumen V: | 5800 cm³ |

(fortgesetzt)

| Extruder II: Zweiwellenkneter ZSK 58 der Fa. Werner und Pfleiderer | |
|---|---|
| Schnecken-Durchmesser D: | 58 mm |
| Schneckenlänge | 48 D |
| Maximales Drehmoment als Summe für beide Schnecken: | 1000 Nm |
| Heizzonen | 8 |
| Schneckengehäuse | 12 |
| Dosierung flüssiger Stoffe mit Zahnradpumpen, gravimetrisch gesteuert, Dosiergenauigkeit | ≤0,5 % |
| Dosierung fester Stoffe in offene Gehäuse mit Dosierwaagen in bekannter Weise; Schmelzefiltration mit Schmelzefilter in bekannter Weise, 5-lagige Siebe, kleinste Maschenweite 42 μm. Austrag über Lochleiste/Messerwalzengranulierung. | |

Die Reinheit der Schmelze wurde durch Auswägen der Rückstände auf dem Schmelzfilter nach Ablösen des noch anhaftenden thermoplastischen Polyurethans mit N,N-Dimethylformamid plus 1 % Di-n-Butylamin bei 70°C und 16 Stunden ermittelt. Die ausgewogene Menge wurde auf eine Tonne durchgegangene Schmelze bezogen. Diese Messungen führten wir mit fünflagigen Schmelzefiltern der Fa. Haver und Boecker durch, deren feinstes Sieb eine Maschenweite von 42 μm aufwies. Inhomogenitäten, die evtl. in anderen grobmaschigeren Sieblagen vor dem 42 μm-Sieb hängengeblieben sind, wurden mit berücksichtigt.

Diese grobmaschigeren Lagen sind zur Stützung des feinen 42 μm-Siebes erforderlich, da bei den Schmelzedrücken um 100 bar das 42 μ-Sieb allein dem Schmelzefluß nicht standhalten würde. Da man aber annehmen kann, daß die bereits mit Sieben größerer Maschenweite zurückgehaltenen Teilchen auch auf dem 42 μm Sieb hängenbleiben müssen, beziehen wir uns nur auf dieses Sieb.

Als weiteres Reinheitskriterium diente die optische Begutachtung von aus dem erzeugten Polyurethan hergestellten Spritzgußkörpern und extrudierten Schläuchen, wodurch sichergestellt wurde, daß keine Inhomogenitäten das Filtersieb passiert haben.

Außerdem lieferte die Veränderung des Schmelzedruckes bei konstantem Durchsatz Informationen über das Ausmaß der Belegung des Schmelzefilters. (Im Falle eines höheren Gehaltes an Inhomogenitäten in der Schmelze werden diese vom Filtersieb zurückgehalten, dessen Strömungswiderstand und damit der Schmelzedruck steigen mehr und mehr.)

Wenn der Schmelzedruck einen oberen Grenzwert erreicht, muß aus rein maschinentechnischen Gründen das Sieb gewechselt werden. In diesem Sinne ist auch die Sieblaufzeit bis zur Erreichung dieses kritischen Schmelzedruckes ein Maß für die Belegung des Filters und damit der Reinheit der Schmelze.

Da sich bei änderndem Schmelzedruck auch andere Verfahrensparameter ändern können, zudem von Rezeptur zu Rezeptur Unterschiede bestehen, lassen diese maschinentechnischen Größen, Schmelzedruck und Sieblaufzeit, nur relative Aussagen über den Reinheitsgrad der Polyurethanschmelze zu. Die Auswägung der Rückstände auf dem Filtersieb ist hingegen eine Größe, die unabhängig von den Verfahrensparametern eine sichere Aussage über den Gehalt an Verunreinigungen in der Schmelze gestattet.

Beispiel 1 (Vergleich)

In den Extruder II mit einer Schnecke entsprechend den DE-A-23 02 564, 24 23 764, 25 49 372, 28 42 806, d.h. in Förderrichtung mit 480 mm zweigängigen Förderelementen, 540 mm Knetelementen (1. Knetzone) stark scherend, 280 mm zweigängigen Förderelementen, 210 mm scherenden Knetelementen (2. Knetzone), 400 mm zweigängigen Förderelementen, 210 mm scherenden Knetelementen (3. Knetzone) und 760 mm zweigängigen Förderelementen besetzt, wurden in Gehäuse Nr. 1 folgende Stoffe eingegeben:

| 88,170 kg/Stunde | Polyesterol aus Adipinsäure, Butandiol-1,4 und Ethandiol-1,2; OH-Zahl: 46,3 mg KOH/g; Säurezahl 0,44 mg KOH/g; Wassergehalt 0,02 %, Vorlagetemperatur: 120°C. |
|---|---|
| 84,070 kg/Stunde | 4,4'Diphenylmethandiisocyanat Vorlagetemperatur 65°C |
| 26,885 kg/Stunde | Butandiol-1,4 Vorlagetemperatur 85°C |
| 1,60 kg/Stunde | Gemisch aus N,N'-Ethylen-bis-Stearamid (UNIWAX® 1760, Fa. Unichema) und gehärtetem Rizinusöl (LOXIOL® G15, Fa. Henkel) im Verhältnis 3 : 5 |
| 0,440 kg/Stunde | 2,2'-6,6'-Tetraisopropyldiphenylcarbodiimid (Lupragen® VP 9119, Elastogran GmbH). |

Das Temperaturprofil in den 8 Zonen wurde durch die Heizzonentemperatur wie folgt charakterisiert:

| Heizzone Nr. | 1 | 2 | 3 | 4 | 5 | 6 | 7 | 8 |
|---|---|---|---|---|---|---|---|---|
| Temp. °C | 190 | 200 | 200 | 190 | 180 | 180 | 190 | 200 |

Die Drehzahl n betrug 200/min.

Die Schnecke war vor Synthesebeginn metallisch blank.

Bei Verwendung eines beschriebenen Schmelzefilters mit der kleinsten Maschenweite von 42 µm ließ sich die Synthese nach etwa 2-stündigem Maschinenlauf praktisch nicht mehr durchführen, da der Schmelzedruck durch die Filterbelegung spätestens eine halbe Stunde nach dem jeweiligen Siebwechsel den zulässigen Höchstwert von 180 bar erreichte und ein erneuter Siebwechsel vorgenommen werden mußte. Die Auswaage ergab Werte von 40 bis 60 g zurückgehaltenen Inhomogenitäten je Tonne Schmelze auf dem Filtersieb.

Insbesondere die Knetzonen waren nach längerer Maschinenlaufzeit von 8 Stunden ohne Schmelzefiltersieb mit festen Belägen bedeckt, die sich in N,N-Dimethylformamid mit 1 % Di-n-Butylamin bei 70°C nicht mehr lösten.

Bei Verwendung eines Filtersiebes größerer Maschenweite von 70 µm ließ sich der Prozeß einigermaßen beherrschen und es entstand ein Polyurethan, das nach Spritzgußverarbeitung des Granulates folgende Eigenschaften aufwies.

| | |
|---|---|
| Shore Härte D, DIN 53 505 | 53 |
| Zugfestigkeit in MPa, DIN 53 504 | 55 |
| Bruchdehnung in %, DIN 53 504 | 460 |
| Abrieb in mm$^3$, DIN 53 516 | 52 |
| Weiterreißwiderstand in N/cm, DIN 53 515 | 1420 |

Die Begutachtung des Siebes und der Polyurethankörper zeigte, daß die Inhomogenitäten nicht vollständig zurückgehalten werden konnten.

Mit diesem Schneckentyp entsprechend dem Stand der Technik läßt sich damit zwar bezüglich mechanischer Kennwerte ein qualitativ gutes Polyurethan erzeugen, die Reinheit der Schmelze entspricht jedoch nicht annähernd der Forderung eines Inhomogenitätengehaltes unter 1 ppm. Damit wird das Verfahren bezüglich Filtrieraufwand, erforderlicher Reinigung der Schnecken nach relativ kurzer Laufzeit neben der Gefahr der Verunreinigung des Polyurethans mit aufwendigen, die kontinuierliche Herstellung störenden Nebenarbeiten erheblich belastet.

Beispiel 2 (Vergleich)

Im Extruder II wurde das gleiche Polyurethan wie in Beispiel 1 erzeugt, jedoch mit dem Unterschied, daß eine erfindungsgemäße Schneckenkombination folgender Art angewandt wurde:

| | Prozent der Gesamtlänge der Schnecke L |
|---|---|
| Bereich mit eingängigen Förderelementen | 22 |
| Mischzone aus zweigängigen Förderelementen hoher Steigung | 22 bis 39 |
| Staustufe am Übergang der Steigung | bei 39 |
| Zweigängige Förderschnecke niedriger Steigung | 39 bis 100 |

Wichtige Verfahrensparameter waren:

| | |
|---|---|
| Drehzahl der Schnecken in min$^{-1}$ | 222 |
| Drehmoment M bei ungehindertem Schmelzefluß (zu Verfahrensbeginn, nach Siebwechsel) in Nm | 476 bis 550 |
| Wert E | 613 bis 708 |

Die Zugabe des festen LOXIOL® G 15/UNIWAX® 1760 Gemisches erfolgte erfindungsgemäß vor der Zugabe von Polyol, Diphenylmethandiisocyanat und Butandiol auf dem eingängigen Schneckenstück.

Durch Auswägen wurden folgende Inhomogenitäten auf dem 42 µm-Filtersieb gemessen:

| Synthesedauer in Stunden | Inhomogenitäten in ppm |
|---|---|
| 7,0 | 0,22 |
| 16,4 | 2,74 |
| 21,3 | 1,22 |
| 27,8 | 2,07 |

Es zeigte sich, daß mit der erfindungsgemäßen Schneckenkonfiguration eine erhebliche Senkung des Gehaltes an Inhomogenitäten erreicht wird. Bei dem Wert E unter 750 sind jedoch Gehalte unter 1 ppm nicht zu erreichen, wodurch die Laufzeiten der Filtersiebe immer noch unbefriedigend kurz im Bereich von 1,5 bis 2 Stunden sind.

Die mechanischen Werte des von Inhomogenitäten freien Polyurethans ergaben sich nach dem Spritzguß wie folgt:

| | |
|---|---|
| Shore Härte D, DIN 53 505 | 52 |
| Zugfestigkeit in MPa, DIN 53 504 | 56 |
| Bruchdehnung in %, DIN 53 504 | 473 |
| Abrieb in $mm^3$, DIN 53 516 | 48 |
| Weiterreißwiderstand in N/cm, DIN 53 515 | 1467 |

Damit lagen die Werte in der gleichen Größenordnung wie bei Beispiel 1.

Beispiel 3 (erfindungsgemäß)

Die Synthese des Polyurethans erfolgte analog Beispiel 1 und 2 unter Verwendung der Schneckenkonfiguration gemäß Beispiel 2.

Es wurde jedoch durch Veränderung des Durchsatzes, des Temperaturprofiles und die kontinuierliche Zugabe von 15 ppm Zinn-II-octoat (bezogen auf die Menge Polyol plus Butandiol-1,4) als 5-prozentige Lösung in Di-Nonyladipat in den Butandiol-1,4-Strom mit Hilfe einer HPLC-Pumpe und Erhöhung der Drehzahl ein erhöhter Wert für die Größe E erhalten.

Die Stoffströme wurden bei sonst unveränderten Bedingungen zur Durchsatzveränderung wie folgt eingestellt:

| | |
|---|---|
| 110,210 kg/h | Polyesterol |
| 105,090 kg/h | 4,4'-Diphenylmethandiisocyanat |
| 33,610 kg/h | Butandiol-1,4 |
| 2,000 kg/h | UNIWAX®/LOXIOL® |
| 0,555 kg/h | Lupragen® VP 9119 |

Das Temperaturprofil der 8 Heizzonen wurde wie folgt gewählt:

| Heizzone Nr. | 1 | 2 | 3 | 4 | 5 | 6 | 7 | 8 |
|---|---|---|---|---|---|---|---|---|
| Temp. (°C) | 190 | 200 | 200 | 200 | 200 | 190 | 180 | 180 |

| | |
|---|---|
| Drehzahl der Schnecken in U/min | 260 |
| Drehmoment M in Nm | 600 bis 690 |
| Wert E | 905 bis 1041 |

Die Menge der Inhomogenitäten blieb auch nach längerer Laufzeit sehr niedrig:

| Synthesedauer in Stunden | Inhomogenitäten in ppm |
|---|---|
| 13 | 0,16 |
| 17,2 | 0,2 |

(fortgesetzt)

| Synthesedauer in Stunden | Inhomogenitäten in ppm |
|---|---|
| 24,2 | 0,2 |

Durch die geringe Belegung des Filtersiebes lief das Verfahren sehr ruhig, es gab nach Sieblaufzeiten von 5 Stunden kaum nachweisbare Druckanstiege in der Schmelze. Beim Einsatz einer erfindungsgemäßen Schneckenkombination, verbunden mit einem Wert für E, der stabil über 750 lag, erhielt man eine Schmelze hoher Reinheit.

Die mechanischen Werte ergaben sich nach dem Spritzguß wie folgt:

| | |
|---|---|
| Shore Härte D, DIN 53 505: | 53 |
| Zugfestigkeit in MPa, DIN 53 504: | 55,8 |
| Bruchdehnung in %, DIN 53 504: | 477 |
| Abrieb in mm$^3$, DIN 53 516: | 44 |
| Weiterreißwiderstand in N/cm, DIN 53 515 | 1560 |

Sie lagen damit in der gleichen Größenordnung wie bei den Beispielen 1 und 2.

Beispiel 4 (erfindungsgemäß)

Die Synthese erfolgte mit den gleichen Rohstoffen und dem gleichen Durchsatz wie in den Beispielen 1 und 2.
Die Schneckenkonfiguration wurde wie folgt geändert:

| | Prozent der Gesamtlänge der Schnecke L |
|---|---|
| Bereich mit eingängigen Förderelementen $Z_1$ | 22 |
| Mischzone aus zweigängigen Förderelementen hoher Steigung $Z_2$ | 22 bis 32 |
| Staustufe aus Schneckenmischelement plus Verringerung der Schneckensteigerung $Z_3$ | 32 bis 39 |
| Zweigängige Förderelemente niedriger Steigung $Z_4$ | 39 bis 100 |

Katalyse: 15 ppm Zinn-II-octoat, bezogen auf Polyol + Butandiol

| | |
|---|---|
| Drehzahl der Schnecken n in U/min: | 250 bis 280 |
| Drehmoment M in Nm | 600 bis 670 |
| Wert E | 870 bis 1080 |

Der Gehalt an Inhomogenitäten wurde nach 13,5 und 24,5 Stunden zu 0,4 und 0,36 ppm ermittelt.
Der auch nach mehrstündiger Sieblaufzeit nahezu fehlende Druckanstieg in der Schmelze wies auf eine ständige geringe Belegung des Filtersiebes bei diesen Werten hin.
Die mechanischen Werte lagen wiederum im üblichen Erwartungsbereich:

| | |
|---|---|
| Shore Härte D, DIN 53 505: | 53 |
| Zugfestigkeit in MPa, DIN 53 504: | 56,5 |
| Bruchdehnung in %, DIN 53 504: | 475 |
| Abrieb in mm$^3$, DIN 53 516: | 38 |
| Weiterreißwiderstand in N/cm, DIN 53 515 | 1573 |

Beispiel 5 (Vergleich)

Während der Synthese gemäß Beispiel 4 wurde der Wert E durch Senkung der Drehzahl der Schnecken und des Katalysatorgehaltes erniedrigt.

| | |
|---|---|
| Drehzahl n in U/min | 222 |
| Drehmoment M in Nm | 570 |
| Wert E: | 733 |

Der Wert E ist wenig unter den erfindungsgemäßen Mindestwert 750 abgesunken. Es ergab sich sofort auf dem Filtersieb ein Inhomogenitätengehalt von 0,79 ppm, d.h. bei Weiterführung der Synthese unter diesen Bedingungen konnte der Wert kleiner 1 ppm nicht mehr gesichert werden. Nach Wiedereinstellung der alten Betriebsbedingungen gemäß Beispiel 4 mit E über 1000 sank der Inhomogenitätengehalt wieder auf 0,4 ppm.

Die mechanischen Werte des dem Betriebszustand von Beispiel 5 entsprechenden ausgeschleusten und verspritzten Granulats lagen wiederum im üblichen Erwartungsbereich.

Beispiel 6 (Vergleich)

In den Extruder II wurden folgende Stoffe eingegeben (Vorlagetemperaturen wie Beispiel 1):

| | |
|---|---|
| 94,260 kg/h | Polyesterol gemäß Beispiel 1 |
| 43,350 kg/h | 4,4'-Diphenylmethandiisocyanat |
| 12,075 kg/h | Butandiol-1,4 |
| 0,330 kg/h | Lupragen® VP 9119 (s. Beispiel 1) |
| 0,450 kg/h | Gemisch aus UNIWAX® 1760 und LOXIOL® G 15 (s. Beispiel 1) |

Die Schneckengeometrie wurde wie in Beispiel 2 oder 3 gewählt. Das Temperaturprofil der Heizzonen betrug:

| Heizzone Nr. | 1 | 2 | 3 | 4 | 5 | 6 | 7 | 8 |
|---|---|---|---|---|---|---|---|---|
| Temp. (°C) | 190 | 200 | 200 | 190 | 180 | 180 | 180 | 180 |

| | |
|---|---|
| Drehzahl der Schnecken in U/min | 246 |
| Drehmoment M in Nm | 179 |
| Wert E | 255 |

Mit dem Wert E von 255 weit unter dem erfindungsgemäßen Mindestwert von 750 entstand eine Schmelze mit sehr hohem Inhomogenitätengehalt, wodurch der Schmelzedruck durch Belegung des Filtersiebes sehr schnell auf die Abschaltgrenze der Maschine von 180 bar anstieg. Der Einsatz eines Filtersiebes von 100 μm und anschließend von 160 μm zeigte den gleichen Effekt.

Beispiel 7 (erfindungsgemäß)

Es wurde im Extruder II mit der Schneckengeometrie laut Beispiel 2 oder 3 das gleiche Polyurethan wie in Beispiel 6 erzeugt, jedoch nach Erhöhung des Wertes E durch Zugabe von 14 ppm Zinn-II-octoat und Veränderung des Temperaturprofils der Heizzone wie folgt:

| Heizzone Nr. | 1 | 2 | 3 | 4 | 5 | 6 | 7 | 8 |
|---|---|---|---|---|---|---|---|---|
| Temp. (°C) | 185 | 200 | 200 | 195 | 195 | 195 | 180 | 170 |

| | |
|---|---|
| Drehzahl n in U/min | 204 |
| Drehmoment M in Nm | 690 |
| Wert E | 816 |

Der Inhomogenitätengehalt lag nach 2,5 Stunden Laufzeit bei 0,2 ppm.

(Die Beispiele 7 und 6 zeigen, daß auch bei weicherer Rezeptureinstellung die erfindungsgemäße Fahrweise zu einer starken Senkung des Inhomogenitätengehaltes führt.)

Die mechanischen Werte lagen im Erwartungsbereich für die entsprechende Zusammensetzung des Polyurethans der Shore Härte 85 A:

| | |
|---|---|
| Zugfestigkeit in MPa, DIN 53 504: | 44,7 |
| Bruchdehnung in %, DIN 53 504: | 579 |
| Abrieb in mm$^3$, DIN 53 516: | 38 |
| Weiterreißwiderstand in N/cm, DIN 53 515 | 769 |

Beispiel 8 (Vergleich)

Es wurde Extruder I mit einer erfindungsgemäßen Extruderschnecke eingesetzt:

| | Prozent der Gesamtlänge L |
|---|---|
| Dichteelemente | 2 |
| Eingängige Förderelemente $Z_1$ | 2-10 |
| Mischzone aus zweigängigen Förderelementen hoher Steigung $Z_2$ | 10-22 |

In der Mischzone mischende, nicht scherende Knetelemente einer Länge von 2 % der Gesamtlänge L.

| | |
|---|---|
| Staustufe aus zweigängigem Förderelement niedriger Steigung und Schlitzstauelement $Z_3$ | 22-25 |
| Zweigängige Förderschnecke $Z_4$ | 25-100 |

Die Rezeptur entsprach der in Beispiel 1, wurde jedoch für einen Durchsatz von 12 kg/h korrigiert. Es wurde eine Vormischung von Butandiol und Polyol eingespeist, da die Dosierung entsprechend geringer Butandiolmengen mit einer relativen Genauigkeit von ≦0,5 % nicht möglich war. Auf den Einsatz der Hilfsstoffe LOXIOL® G 15 und UNIWAX® 1760 wurde verzichtet.

| Temperaturprofil | | | | | | | | | | |
|---|---|---|---|---|---|---|---|---|---|---|
| Heizzone Nr. | 1 | 2 | 3 | 4 | 5 | 6 | 7 | 8 | 9 | 10 |
| Temp. (°C) | 180 | 230 | 240 | 230 | 220 | 210 | 210 | 210 | 210 | 220 |

| | |
|---|---|
| Drehzahl n in U/min | 290 |
| Drehmoment M in Nm | 105 |
| Wert E | 640 |

Es ergab sich ein verhältnismäßig inhomogenes Polyurethan, wenn man ohne Schmelzefilter arbeitete. Auf einem in den Schmelzestrom gebrachten Filtersieb der Maschenweite von 42 μm ließ sich ein Gehalt an Inhomogenitäten von 3,2 ppm feststellen. Die mechanischen Werte des hergestellten Polyurethans entsprachen den in den Beispielen 1 bis 5 angegebenen.

Beispiel 9 (erfindungsgemäß)

Die Synthesedurchführung erfolgte wie in Beispiel 8, aber der Wert E wurde durch Änderung des Temperaturprofils und durch Zugabe von 10 ppm Zinn(II)-octoat in erfindungsgemäßer Weise erhöht.

| Temperaturprofil | | | | | | | | | | |
|---|---|---|---|---|---|---|---|---|---|---|
| Heizzone Nr. | 1 | 2 | 3 | 4 | 5 | 6 | 7 | 8 | 9 | 10 |
| Temp. (°C) | 190 | 210 | 210 | 190 | 190 | 180 | 180 | 190 | 200 | 220 |

| Drehzahl n in U/min | 290 |
|---|---|
| Drehmoment M in Nm | 197 |
| Wert E | 1200 |

Das Polyurethan war frei von Inhomogenitäten, auch ohne Schmelzfilter. Bei Einsatz eines Schmelzefiltersiebes der Maschenweite von 42 µm wurde ein Gehalt an Inhomogenitäten kleiner als 0,3 ppm ermittelt.

Es wurden folgende mechanische Kennwerte ermittelt:

| Shore Härte D, DIN 53 505: | 61 |
|---|---|
| Zugfestigkeit in MPa, DIN 53 504: | 58 |
| Bruchdehnung in %, DIN 53 504: | 450 |
| Abrieb in mm$^3$, DIN 53 516: | 40 |
| Weiterreißwiderstand in N/cm, DIN 53 515 | 1469 |

Hilfsstoffe wie UNIWAX® 1760 und/oder LOXIOL® G 15 wirken bekanntlich härteerniedrigend. Es ist deshalb leicht zu erklären, warum beim vorliegenden Beispiel 9 die Härte gegenüber den vorangegangenen Beispielen gleicher Rezeptur höher ausfällt.

Beispiel 10 (erfindungsgemäß)

Es wurde Extruder I mit der im Beispiel 8 beschriebenen Extruderschnecke eingesetzt. Die Dosierung der polyurethanbildenden Rohstoffe erfolgte in Gehäuse-Nr. 1 im Verhältnis:

| 1000 g | Polyesterol aus Adipinsäure, Butandiol-1,4 und Hexandiol-1,6, OH-Zahl 56,1 mg KOH/g; Säurezahl 0,38 mg KOH/g; Wassergehalt 0,03 %; Vorlagetemperatur 95°C |
|---|---|
| 95,8 g | Butandiol-1,4, Vorlagetemperatur wie Polyesterol |
| 17 g | Stabaxol, Vorlagetemperatur wie Polyesterol |
| 400 g | 4,4'-Diphenylmethandiisocyanat, Vorlagetemperatur 65°C |

Die Zugabe der nichtisocyanathaltigen Komponenten (Komponente A) erfolgte als Vormischung entsprechend Beispiel 8, wobei dieser zuvor 50 ppm Zinn(-II)-octoat als Katalysator zugesetzt wurden. Die Dosierströme der Komponente A und des Isocyanates wurden auf eine Durchsatzleistung von 10 kg/h eingestellt. Mittels einer Kolbendosierpumpe wurden zusätzlich in Gehäuseteil Nr. 7 5,4 kg/h Dibutylphthalat zugeführt.

| Temperaturprofil | | | | | | | | | | |
|---|---|---|---|---|---|---|---|---|---|---|
| Heizzone Nr. | 1 | 2 | 3 | 4 | 5 | 6 | 7 | 8 | 9 | 10 |
| Temp. (°C) | 210 | 220 | 240 | 230 | 220 | 210 | 190 | 160 | 140 | 120 |

| Drehzahl n in U/min | 290 |
|---|---|
| Drehmoment M in Nm | 138 |
| Wert E | 840 |

Das so erhaltene TPU-Granulat, wurde nach 7 Tagen Lagerung bei Raumtemperatur zu Prüfkörpern verspritzt. Die visuelle Begutachtung der transparenten Prüfkörper, an denen nachstehende Kennwerte ermittelt wurden, zeigte ausgezeichnete Homogenität.

| Shore Härte D, DIN 53 505: | 62 |
|---|---|
| Zugfestigkeit in MPa, DIN 53 504: | 21,6 |

(fortgesetzt)

| | |
|---|---|
| Bruchdehnung in %, DIN 53 504: | 817 |
| Weiterreißwiderstand in N/cm, DIN 53 515 | 230 |
| Abrieb in mm$^3$, DIN 53 516: | 34 |

Beispiel 11 (erfindungsgemäß)

Es wurde Extruder I mit der im Beispiel 8 beschriebenen Extruderschnecke eingesetzt. Die Dosierung der polyurethanbildenden Rohstoffe erfolgte in Gehäuse-Nr. 2 im Verhältnis:

| | |
|---|---|
| 1000 g | Polyesterol aus Adipinsäure und Butandiol-1,4, OH-Zahl 44,9 mg KOH/g, Säurezahl 0,34 mg KOH/g, Wassergehalt 0,04 %, Vorlagetemperatur 120°C |
| 308,7 g | Butandiol-1,4, Vorlagetemperatur wie Polyesterol |
| 5,0 g | Stabaxol 1 |
| 6,5 g | Irganox 1010 |
| 960 g | 4,4'-Diphenylmethandiisocyanat, Vorlagetemperatur 65°C |

Die Dosierung der nichtisocyanathaltigen Komponenten (Komponente A) erfolgte wie in Beispiel 8 als Vormischung, wobei dieser zuvor 10 ppm Zinn(II)-octoat als Katalysator zugesetzt wurden. Die Dosierströme der polyurethanbildenden Rohstoffe wurden auf eine Dosierleistung von 12 kg/h eingestellt. Zusätzlich wurden über eine gravimetrisch gesteuerte Dosierwaage 4 kg/h eines Copolymerisates auf Basis ABS, Typ Terluran 996 S (BASF) in Gehäuseteil Nr. 1 zugeführt.

| Temperaturprofil | | | | | | | | | | |
|---|---|---|---|---|---|---|---|---|---|---|
| Heizzone Nr. | 1 | 2 | 3 | 4 | 5 | 6 | 7 | 8 | 9 | 10 |
| Temp. (°C) | 180 | 230 | 240 | 230 | 220 | 210 | 210 | 210 | 210 | 220 |

| | |
|---|---|
| Drehzahl n in U/min: | 290 |
| Drehmoment M in Nm | 153 |
| Wert E: | 930 |

Das TPU-ABS-Blend wurde nach 3 Tagen Lagerung bei Raumtemperatur zu Prüfkörpern verspritzt. Trotz guten Kontrastes infolge der weiß-gelblichen Färbung der Prüfkörper waren keine dunkel gefärbten Inhomogenitäten erkennbar. Die Überprüfung der Kennwerte ergab:

| | |
|---|---|
| Shore Härte D, DIN 53 505 | 68 |
| Zugfestigkeit in MPa, DIN 53 504 | 59,8 |
| Bruchdehnung in %, DIN 53 504 | 415 |
| Weiterreißwiderstand in N/cm, DIN 53 515 | 1382 |
| Abrieb in mm$^3$, DIN 53 516 | 52 |
| Kerbschlagzähigkeit in KJ/m$^2$, DIN 53 453 n. Charpy -20°C | 26 |
| -25°C | 18 |
| -30°C | 16 |
| Elastizitätsmodul in MPa, DIN 53 457-Z | 290 |

**Patentansprüche**

1.   Verfahren zur Herstellung von thermoplastischen Polyurethanen, in dem

a) organische und/oder modifizierte organische Polyisocyanate mit

b) mindestens einer oligomeren Polyhydroxy- und/oder Polyaminoverbindung mit einem mittleren Molekulargewicht von 400 bis 10 000 g/mol,

gegebenenfalls in Gegenwart von

c) mindestens zwei Zerewitinow-aktive Wasserstoffatome aufweisenden Kettenverlängerungsmitteln mit einem mittleren Molekulargewicht unter 400 g/mol,

d) Katalysatoren,

e) gegenüber Isocyanaten weniger als difunktionellen Verbindungen und/oder weniger als difunktionellen Isocyanaten sowie

f) Hilfsmitteln und/oder Zusatzstoffen,

in einem Zweiwellenextruder mit gleichem Drehsinn beider Wellen und einem Längen-/Durchmesserverhältnis von 20 bis 60 zur Umsetzung gebracht werden und das gebildete thermoplastische Polyurethan aus dem Extruder unter Formgebung ausgetragen wird, dadurch gekennzeichnet, daß man zumindest einen Teil der Komponenten a) und b) sowie der gegebenenfalls mitverwendeten Komponenten c) bis f) in eine erste Zone ($Z_1$) des Zweiwellenextruders einbringt, die mit eingängigen Schneckenförderelementen ausgerüstet ist, welche in einem Längenbereich, beginnend ab 0 bis 3/100 und endend mindestens bei 8/100 und höchstens 30/100 der gesamten Schneckenlänge L, angeordnet sind, anschließend das niederviskose Gemisch durch eine Mischzone ($Z_2$) mit geringer Scherwirkung aus zweigängigen Schneckenförderelementen und/oder Mischelementen führt, wobei diese Mischzone ($Z_2$) innerhalb eines Längenbereiches zwischen 8/100 und 45/100 mit einer Gesamtlänge innerhalb dieses Bereiches von 5/100 bis 25/100 der gesamten Schneckenlänge L angeordnet ist, danach das Produkt in eine wenig scherend wirkende Stauzone ($Z_3$) leitet, wobei diese Stauzone ($Z_3$) innerhalb eines Längenbereiches zwischen 20/100 und 50/100 mit einer Gesamtlänge der Staustufe innerhalb dieses Bereiches von 0,2/100 bis 10/100 der gesamten Schneckenlänge L angeordnet ist, danach in einer Polymerisationszone ($Z_4$), die mit zweigängigen Förderschnecken ausgerüstet ist, die Polymerisation im hochviskosen Bereich durchführt, wobei sich die Zone ($Z_4$) in einem Längenbereich zwischen 30/100 und 100/100 der gesamten Schneckenlänge L befindet, und das Polyurethan austrägt, mit der Maßgabe, daß das Verfahren so geführt wird, daß der Wert E , definiert als

$$E = \frac{M \times n \times D_G^{\,2}}{V},$$

wobei

M - das gesamte, auf beide Extruderwellen wirkende Drehmoment in [Nm],

n - die Drehzahl der Extruderwellen in [min$^{-1}$],

$D_G$- den kleinsten Innendurchmesser des Extrudergehäuses in [cm] und

V - das freie zur Verfügung stehende Reaktorvolumen zwischen Extrudergehäuse und den Schnecken- und gegebenenfalls anderen Elementen als Besatz der Extruderwellen in [cm$^3$]

bedeuten, größer als 750 ist.

2. Verfahren nach Anspruch 1, dadurch gekennzeichnet, daß die Einstellung des Wertes E durch Variation der Gehäusetemperaturen des Extruders zwischen 80 und 280°C und/oder durch Änderung der Katalysatormenge und/oder der Gesamtdurchsatzmenge erfolgt.

3. Verfahren nach den Ansprüchen 1 oder 2, dadurch gekennzeichnet, daß die Einsatzstoffe a) bis f) ganz oder teilweise als Vormischung oder einzeln in den Extruder eingespeist werden.

4. Verfahren nach einem der Ansprüche 1 bis 3, dadurch gekennzeichnet, daß die flüssigen Hilfs- und Zusatzstoffe f), die Katalysatoren d) sowie von der Gesamtmenge abgetrennte Anteile der Komponenten a), b), c) und e) an einer oder mehreren Stellen in den Extruder eingespeist werden.

**5.** Verfahren nach einem der Ansprüche 1 bis 3, dadurch gekennzeichnet, daß feste Hilfs- und Zusatzstoffe f) nach der Stauzone ($Z_3$) in den Extruder eingebracht werden.

**6.** Verfahren nach einem der Ansprüche 1 bis 3, dadurch gekennzeichnet, daß feste Hilfs- und Zusatzstoffe f) vor der Zugabe der Komponenten a), b), c) und e) auf dem eingängigen Schneckenabschnitt ($Z_1$) eingebracht werden.

**7.** Verfahren nach einem der Ansprüche 1 bis 6, dadurch gekennzeichnet, daß das molare Verhältnis zwischen Isocyanatgruppen und allen an der Reaktion beteiligten Zerewitinow-aktiven Wasserstoffatomen zwischen 0,9 und 1,15 und die Dosierschwankungen für die diese Gruppen tragenden Stoffe unter 0,5 % liegen.

**8.** Verfahren nach einem der Ansprüche 1 bis 7, dadurch gekennzeichnet, daß die Verweilzeit der reagierenden Schmelze im Extruder 0,3 bis 5 Minuten beträgt.

## Claims

**1.** A process for the preparation of thermoplastic polyurethanes by reacting

    a) organic or modified organic polyisocyanates with

    b) at least one oligomeric polyhydroxy and/or polyamino compound having an average molecular weight of from 400 to 10 000 g/mol,

in the presence or absence of

    c) chain extenders having at least two Zerewitinoff-active hydrogen atoms and an average molecular weight of less than 400 g/mol,

    d) catalysts,

    e) compounds which are less than difunctional with respect to isocyanates and/or isocyanates which are less than difunctional and

    f) assistants and/or additives

in a twin-screw extruder in which both screws rotate in the same direction and which has a length/diameter ratio of from 20 to 60, and discharging the resulting thermoplastic polyurethane from the extruder with shaping, wherein at least some of the components a) and b) and of the components c) to f) which may also be used are introduced into a first zone ($Z_1$) of the twin-screw extruder, which zone is equipped with single-flight screw conveying elements which are arranged in a length region beginning from 0 to 3/100 and ending at least at 8/100 and at most at 30/100 of the total screw length L, the low-viscosity mixture is then passed through a mixing zone ($Z_2$) having a small shearing effect and comprising double-flight screw conveying elements or mixing elements, this mixing zone ($Z_2$) being arranged within a length region from 8/100 to 45/100 with a total length within this region of from 5/100 to 25/100 of the total screw length L, the product is then passed into a retarding zone ($Z_3$) having little shearing effect, this retarding zone ($Z_3$) being arranged within a length region from 20/100 to 50/100 with a total length of the retarding stage within this region of from 0.2/100 to 10/100 of the total screw length L, the polymerization is then carried out at high viscosity in a polymerization zone ($Z_4$) equipped with double-flight conveying screws, the zone ($Z_4$) being present in a length region from 30/100 to 100/100 of the total screw length L, and the polyurethane is discharged, with the proviso that the process is carried out in such a way that the value E, defined as

$$E = \frac{M \times n \times D_G{}^2}{V},$$

where

M - is the total torque, in [Nm], acting on the two extruder shafts,

n - is the speed of the extruder screws in [min$^{-1}$],

$D_G$- is the smallest internal diameter of the extruder barrel in [cm] and

V - is the free reactor volume available between the extruder barrel and the screw elements and any other elements as equipment on the extruder shafts in [cm$^3$],

is greater than 750.

2. A process as claimed in claim 1, wherein the E value is adjusted by varying the barrel temperatures of the extruder from 80 to 280°C or by changing the amount of catalyst or the total throughput.

3. A process as claimed in claim 1 or 2, wherein the starting materials a) to f) are fed into the extruder completely or partially as a premix or individually.

4. A process as claimed in any of claims 1 to 3, wherein the liquid assistants and additives f), the catalysts d) and amounts of the components a), b), c) and e) which are separated off from the total amount are fed into the extruder at one or more points.

5. A process as claimed in any of claims 1 to 3, wherein solid assistants and additives f) are introduced into the extruder after the retarding zone ($Z_3$).

6. A process as claimed in any of claims 1 to 3, wherein solid assistants and additives f) are introduced before the addition of the components a), b), c) and e) at the single-flight screw section ($Z_1$).

7. A process as claimed in any of claims 1 to 6, wherein the molar ratio of isocyanate groups to all Zerewitinoff-active hydrogen atoms involved in the reaction is from 0.9 to 1.15 and the metering fluctuations for the substances carrying these groups are less than 0.5%.

8. A process as claimed in any of claims 1 to 7, wherein the residence time of the reacting melt in the extruder is from 0.3 to 5 minutes.

**Revendications**

1. Procédé de préparation de polyuréthanes thermoplastiques, dans lequel on fait réagir

    a) des polyisocyanates organiques et/ou organiques modifiés avec

    b) au moins un composé polyhydroxylé et/ou polyaminé oligomère avec un poids moléculaire moyen de 400 à 10.000 g/mole,

    éventuellement en présence

    c) d'agents d'allongement de chaîne présentant au moins deux atomes d'hydrogène à activité de type Zerevitinov avec un poids moléculaire moyen inférieur à 400 g/mole,

    d) de catalyseurs,

    e) de composés moins que difonctionnels par rapport aux isocyanates et/ou isocyanates moins que difonctionnels, de même que

    f) d'adjuvants et/ou d'additifs,

dans une extrudeuse à deux vis à même sens de rotation des deux vis et avec un rapport longueur/diamètre de 20 à 60 et on décharge le polyuréthane thermoplastique formé de l'extrudeuse tout en lui donnant une forme, caractérisé en ce qu'on introduit au moins une partie des composants a) et b), de même qu'éventuellement des composants c) à f) utilisés conjointement dans une première zone ($Z_1$) de l'extrudeuse à deux vis, qui est munie d'éléments convoyeurs à vis à pas simple, qui sont disposés dans une région dans le sens de la longueur commençant à 0 à 3/100 et se terminant au moins à 8/100 et au maximum à 30/100 de la longueur de vis totale L, en ce que le mélange de faible viscosité est passé par une zone de mélange ($Z_2$) avec une faible action de cisaillement, constituée d'éléments convoyeurs à vis à double pas et/ou d'éléments de mélange, cette zone de mélange ($Z_2$) étant disposée à l'intérieur d'une région dans le sens de la longueur entre 8/100 et 45/100 avec une longueur totale à l'intérieur de cette région de 5/100 à 25/100 de la longueur de vis totale L, en ce que le produit est ensuite conduit dans une zone de retenue ($Z_3$) à faible action de cisaillement, cette zone de retenue ($Z_3$) étant disposée à l'intérieur d'une région dans le sens de la longueur entre 20/100 et 50/100 avec une longueur totale de l'étage de retenue à l'intérieur de cette région de 0,2/100 à 10/100 de la longueur de vis totale L, en ce qu'on effectue ensuite dans une zone de polymérisation ($Z_4$) qui est munie de vis convoyeuses à double pas, la polymérisation dans une gamme de viscosités élevées, la zone ($Z_4$) se trouvant dans une région dans le sens de la longueur entre 30/100 et 100/100 de la longueur de vis totale L, et en ce que le polyuréthane est déchargé, sous condition que le procédé est réalisé de telle manière que la valeur E, définie en tant que

$$E = \frac{M \times n \times D_G^2}{V},$$

avec les significations suivantes

M -   le couple total agissant sur les deux vis d'extrudeuse en [Nm],
n -   la vitesse de rotation des vis d'extrudeuse en [min$^{-1}$],
$D_G$ -   le plus petit diamètre intérieur du carter de l'extrudeuse en [cm] et
V -   le volume de réacteur libre disponible entre le carter de l'extrudeuse et les éléments de vis et éventuellement d'autres éléments servant de garnitures des vis d'extrudeuse en [cm$^3$],

est supérieure à 750.

2. Procédé selon la revendication 1, caractérisé en ce que le réglage de la valeur E est effectué par la variation des températures du carter de l'extrudeuse entre 80 et 280°C et/ou par la modification de la quantité de catalyseur et/ou du débit global.

3. Procédé selon les revendications 1 ou 2, caractérisé en ce que les matières premières a) à f) sont introduites dans l'extrudeuse entièrement ou en partie sous forme d'un prémélange ou individuellement.

4. Procédé selon l'une des revendications 1 à 3, caractérisé en ce que les adjuvants et les additifs f) liquides, les catalyseurs d), de même que les parties des composants a), b), c) et e) séparées de la quantité globale sont introduits dans l'extrudeuse à un ou plusieurs endroits.

5. Procédé selon l'une des revendications 1 à 3, caractérisé en ce que les adjuvants et les additifs f) solides sont introduits dans l'extrudeuse après la zone de retenue ($Z_3$).

6. Procédé selon l'une des revendications 1 à 3, caractérisé en ce que les adjuvants et les additifs f) solides sont introduits avant l'addition des composants a), b), c) et e) dans la section de vis à pas simple ($Z_1$).

7. Procédé selon l'une des revendications 1 à 6, caractérisé en ce que le rapport molaire entre les groupes isocyanates et tous les atomes d'hydrogène à activité de type Zerevitinov participant à la réaction se situe entre 0,9 et 1,15 et en ce que les variations du dosage des substances portant ces groupes sont inférieures à 0,5 %.

8. Procédé selon l'une des revendications 1 à 7, caractérisé en ce que le temps de séjour de la masse en fusion en réaction dans l'extrudeuse s'élève à 0,3 à 5 minutes.